# EUROPÄISCHE PATENTANMELDUNG

(11) **EP 1 186 371 A1**
(43) Veröffentlichungstag der Anmeldung: **13.03.2002**
(21) Anmeldenummer: 00810809.4
(22) Anmeldetag: 08.09.2000
(51) Int. Cl.: B23Q 1/01, B23Q 11/00

(54) **Portalfräsmaschine**

(71) Anmelder: Mikron Comp-Tec AG, 2560 Nidau (CH)
(72) Erfinder: Geiger, Michael, 82319 Starnberg (DE); Meier, Peter, 9403 Goldau (CH)
(74) Vertreter: Roshardt, Werner Alfred, Dipl.-Phys.

(57) **Zusammenfassung**

Eine Portalfräsmaschine weist ein Portal (20) auf, an welchem ein Fräsaggregat (50) translatorisch in einer ersten Richtung (Z) und einer zweiten Richtung (Y) quer zur Maschinenlängsrichtung (X) verfahrbar angeordnet ist. Die Portalfräsmaschine weist weiter ein längliches Maschinenbett (10) auf, an welchem eine im Wesentlichen horizontal in Maschinenlängsrichtung (X) durch das Portal hindurch führende ebene Linearführung (14, 16) für einen in X-Richtung (2) verfahrbaren Schlitten (30) angebracht ist, welcher eine Werkstückaufspannvorrichtung (32) trägt. Die Führungsebene der Linearführung (14, 16) ist bezüglich der Horizontalen quer zurX-Richtung um einen Winkel derart geneigt, dass beim Fräsen entstehende Späne allein aufgrund der Schwerkraft von der Linearführung (14, 16) herab fallen. Durch die Schrägstellung der Führungsebene der Linearführung (14, 16) nach Art einer Schrägbettführung wird eine gute Späneabfuhr und eine gute Zugänglichkeit zum Werkzeugeingriffspunkt gewährleistet.

## Beschreibung

### Technisches Gebiet

Die Erfindung betrifft eine Portalfräsmaschine, d.h. eine Fräsmaschine in Portalbauweise, gemäss dem Oberbegriff der unabhängigen Patentansprüche.

### Stand der Technik

Portalfräsmaschinen der eingangs genannten Art sind allgemein bekannt. Sie weisen ein Maschinenbett und ein fest mit dem Maschinenbett verbundenes Portal auf. Am Portal, das üblicherweise zwei vertikale, unten fest mit dem Maschinenbett verbundene Ständer und einen diese Ständer miteinander verbindenden Querbalken umfasst, ist ein mit einer Frässpindel bzw. einer Werkzeugspindel versehenes Fräsaggregat translatorisch in eine erste Richtung (Z) und eine zweite Richtung (Y) quer zu der durch den Portaldurchgang definierten Maschinenlängsrichtung (X) verfahrbar angeordnet. Weiter weisen Portalfräsmaschinen der genannten Art eine fest mit dem Maschinenbett verbundene ebene Linearführung auf. Diese ist im Wesentlichen horizontal in Maschinenlängsrichtung (X), d.h. in X-Richtung, angeordnet. Sie führt durch das Portal hindurch und dient zum Führen eines in X-Richtung durch das Portal hindurch verfahrbaren Schlittens, der eine Werkstückaufspannvorrichtung, typischerweise in Form eines Werkstücktisches, trägt. Üblicherweise sind solche Portalfräsmaschinen derart ausgebildet und angeordnet, dass die translatorische Bewegungsrichtung X im Wesentlichen horizontal durch das Portal hindurch, die translatorische Bewegungsrichtung Z im Wesentlichen vertikal sowie die translatorische Bewegungsrichtung Y im Wesentlichen horizontal und rechtwinklig zur X-Richtung verlaufen.

Im Vergleich zu Einständerfräsmaschinen in C-Bauweise, die einen einzigen, im Wesentlichen vertikalen Ständer aufweisen, an dem oben ein das Fräsaggregat tragender Auslegerarm angebracht ist und der unten fest mit dem Maschinenbett verbunden ist, welches einen Werkstücktisch trägt, weisen Portalfräsmaschinen Vorteile hinsichtlich der Steifigkeit der Maschine auf. Die in sich geschlossene Struktur aus dem Portal und dem Maschinenbett kann bei gleicher Dimensionierung grössere Kräfte aufnehmen als die einseitig offene Struktur einer Einständermaschine in C-Bauweise.

Hingegen sind Portalfräsmaschinen weniger gut für einen automatisierten Betrieb geeignet als Einständermaschinen in C-Bauweise. Zum einen ist bei Portalfräsmaschinen die Späneabfuhr problematisch, weil die beim Fräsen entstehenden Späne dazu neigen, auf der durch das Portal hindurch führenden Linearführung sitzen zu bleiben. Zum andern ist durch das Portal die Zugänglichkeit zu dem im Bereich des Portals liegenden Werkzeugeingriffspunkt (englisch "tool processing point") und damit zum Werkzeug und zum Werkstück eingeschränkt.

### Darstellung der Erfindung

Aufgabe der Erfindung ist die Angabe einer Fräsmaschine in Portalbauweise, welche sich gut automatisieren lässt und ausserdem eine gute Späneabfuhr und eine gute Zugänglichkeit zum Werkzeugeingriffspunkt gewährleistet.

Die Lösung der Aufgabe ist durch die Merkmale der unabhängigen Patentansprüche definiert. Gemäss der Erfindung ist eine Portalfräsmaschine mit einem Portal versehen, an welchem ein Fräsaggregat derart angeordnet ist, dass es translatorisch in eine erste Richtung (Z) und eine zweite Richtung (Y) quer zur Maschinenlängsrichtung (X) verfahrbar ist. Die Portalfräsmaschine weist weiter ein längliches Maschinenbett auf, an welchem eine im Wesentlichen horizontal in Maschinenlängsrichtung (X) durch das Portal hindurch führende ebene Linearführung für einen eine Werkstückaufspannvorrichtung tragenden, in X-Richtung verfahrbaren Schlitten (nachfolgend auch als X-Schlitten bezeichnet) angebracht ist. Die ebene Linearführung ist derart angeordnet, dass die Führungsebene der Linearführung bezüglich der Horizontalen quer zur X-Richtung um einen Winkel derart geneigt ist, dass beim Fräsen entstehende Späne allein aufgrund der Schwerkraft von der Linearführung herab fallen.

Im Zuge der vorliegenden Beschreibung und der Ansprüche wird unter einerLinearführung (auch als Geradführung bezeichnet) ein Lager zur Führung geradlinig bewegter Teile verstanden. Eine Linearführung wird als eben bezeichnet, wenn sie eine sich in Führungslängsrichtung erstreckende Führungsebene definiert. Im Falle einer Linearführung mit einem im Wesentlichen flachen, ebenen Führungsbett wird die Führungsebene durch die Führungsbettfläche bestimmt. Dabei braucht die Führungsbettfläche nicht vollkommen eben zu sein, sondern sie kann mit Durchgängen, Ausnehmungen, Verstärkungsrippen oder ähnlichen Strukturen versehen sein, die abschnittsweise von der ebenen Form der Führungsbettfläche abweichen. Bei einer Linearführung, die im Wesentlichen eine einzige, flache Führungsbahn umfasst (z.B. einer Flachführung oder einer Schwalbenschwanzführung), kann die Bahnfläche als Führungsebene der Linearführung bezeichnet werden. Umfasst eine Linearführung zwei parallele Schienen oder Gleitbahnen, kann die durch die beiden parallelen Schienen bzw. Gleitbahnen bestimmte Ebene als Führungsebene bezeichnet werden. Falls eine Linearführung als Profilschienenführung mit einer im Wesentlichen ebenen Profiloberfläche ausgebildet ist, an welcher mehrere parallele Führungsschienen angebracht sind, kann diese Profiloberfläche als Führungsebene der Linearführung bezeichnet werden.

Erfindungsgemäss ist die Führungsebene der durch das Portal hindurch verlaufenden ebenen Linearführung nach Art einer Schrägbettführung quer zur Führungsrichtung stark geneigt. Durch die starke Neigung der Führungsebene wird erreicht, dass Späne, die während des Fräsvorgangs erzeugt werden und auf diese Linearführung fallen, nicht auf der Linearführung liegen bleiben, sondern aufgrund der Schwerkraft von dieser abrutschen. Dadurch wird eine gute Späneabfuhr erreicht, was Voraussetzung ist für eine Automatisierung der Portalfräsmaschine. Im Unterschied dazu sind die durch das Portal hindurch führenden ebenen Linearführungen von bisher bekannten Portalfräsmaschinen stets mit im Wesentlichen horizontaler, nicht geneigter Führungsebene angeordnet, um eine möglichst kleine Bauhöhe zu erreichen.

Durch die starke Neigung der Führungsebene wird weiter die Möglichkeit geschaffen, eine allfällige seitlich neben der Linearführung angeordnete Werkstückwechselvorrichtung näher bei dem die Werkstückaufspannvorrichtung tragenden Schlitten, d.h. dem X-Schlitten, anzuordnen, als dies bei einer ebenen Linearführung mit horizontaler Führungsebene möglich wäre. Dadurch können die Zeiten für die Werkstückwechsel verkürzt werden, was zu einer Erhöhung der Produktivität der erfindungsgemässen Portalfräsmaschine beiträgt.

Aufgrund der starken Neigung bzw. Schrägstellung der Führungsebene der Linearführung kann zudem ein Operateur seitlich näher an den die Werkstückaufspannvorrichtung tragenden Schlitten bzw. den Werkzeugeingriffspunkt herantreten, als dies bei einer ebenen Linearführung mit horizontaler Führungsebene möglich wäre. Dies erweist sich als vorteilhaft z.B. bei der Einstellung der Maschine für neue Bearbeitungsvorgänge und trägt zur Verbesserung der Ergonomie der erfindungsgemässen Portalfräsmaschine bei.

Weiter wird durch die Schrägstellung des Führungsbettes bzw. der Führungsebene der Linearführung die Möglichkeit geschaffen, den die Werkstückaufspannvorrichtung tragenden Schlitten auf vergleichsweise einfache Art auf verschiedenen Höhen zu montieren. Dadurch kann die erfindungsgemässe Portalfräsmaschine besser zur Bearbeitung von Werkstücken mit unterschiedlichen Dimensionen angepasst werden.

Bevorzugt ist die Führungsebene der Linearführung bezüglich der Horizontalen quer zur X-Richtung um einen Winkel geneigt, der grösser als 40 Grad, vorzugsweise sogar grösser als 60 Grad ist. Insbesondere kann dieser Winkel auch ungefähr 90 Grad betragen. Für schwere X-Schlitten wird ein eher kleiner Neigungswinkel von beispielsweise ungefähr 45 Grad bevorzugt. Durch eine vergleichsweise kleine Neigung der Führungsebene wird eine bessere Auflage des schweren Schlittens auf der Linearführung gewährleistet. Für leichte X-Schlitten werden hingegen eher grössere Neigungswinkel bevorzugt, um ein optimales Abrutschen der Späne von der Linearführung zu gewährleisten. Insbesondere kann für leichte Schlitten auch ein Neigungswinkel von 90 Grad verwendet werden. In diesem Fall ist die Führungsebene bzw. das Führungsbett der Linearführung vertikal angeordnet.

Es sind aber auch Varianten der Erfindung möglich, bei denen die Führungsebene der Linearführung bezüglich der Horizontalen quer zur X-Richtung um einen Winkel geneigt ist, der grösser als 90 Grad ist. Die Führungsebene bzw. das Führungsbett sind dann überhängend angeordnet, so dass der X-Schlitten hängend an der Linearführung geführt wird. Bei diesen Erfindungsvarianten ist die Linearführung besonders gut von herabfallenden Spänen geschützt.

Vorzugsweise ist bei einer erfindungsgemässen Portalfräsmaschine die Linearführung derart ausgebildet, dass der X-Schlitten wahlweise auf verschiedenen Höhen an der Linearführung montiert werden kann. Dies ermöglicht eine einfache Anpassung der Portalfräsmaschine zur Bearbeitung von Werkstücken mit unterschiedlichen Grössen. Zu diesem Zweck können je nach Anwendungsfall Tische mit unterschiedlichen Bearbeitungshöhen montiert werden. Besonders vorteilhaft erweist sich die Möglichkeit, den X-Schlitten auf verschiedenen Höhen montieren zu können beim Einsatz von Rund-und/oder Schwenktischen für die 5-achsige Bearbeitung. Solche Tische bauen relativ hoch und schränken bei herkömmlichen Portalmaschinen den Durchgang resp. die Werkstückgrösse entsprechend ein.

Eine erfindungsgemässe Portalfräsmaschine kann einen weiteren Schlitten (Y-Schlitten) aufweisen, der am Portal in horizontaler Y-Richtung quer zur X-Richtung verfahrbar angeordnet ist, wobei an diesem Y-Schlitten in vertikaler Z-Richtung verfahrbar das Fräsaggregat in Form eines mit einer Frässpindel versehenen Spindelkastens angeordnet ist. Diese Ausführungsart der Erfindung eignet sich besonders gut zum Hochgeschwindigkeitsfräsen, da zum Bewegen des Spindelkastens bloss vergleichsweise kleine Massen zu bewegen sind. Als Alternative dazu kann eine erfindungsgemässe Portalfräsmaschine jedoch auch ein Portal mit einem in vertikaler Z-Richtung verfahrbaren Querträger umfassen, an welchem ein in Y-Richtung verfahrbarer Spindelkasten angeordnet ist.

Gemäss einer weiteren bevorzugten Ausführungsart der Erfindung ist bei einer Portalfräsmaschine mit einem Portal, an welchem ein Fräsaggregat translatorisch in einer ersten Richtung (Z) und einer zweiten Richtung (Y) quer zur Maschinenlängsrichtung (X) verfahrbar angeordnet ist, und einem länglichen Maschinenbett, an welchem eine im Wesentlichen horizontal in Maschinenlängsrichtung (X) durch das Portal hindurch führende ebene Linearführung für einen eine Werkstückaufspannvorrichtung tragenden, in X-Richtung verfahrbaren Schlitten angebracht ist, das Maschinenbett aussermittig in Bezug auf eine vertikale, in X-Richtung durch die Portalmitte hindurch verlaufende Mittelebene angeordnet. Die in X-Richtung verlaufende ebene Linearführung ist dann ebenfalls aussermittig in Bezug auf diese Mittelebene angeordnet. Im Falle einer stark geneigten Führungsebene der Linearführung kann jedoch aufgrund der Neigung der Führungsebene der Schlitten mit der Werkstückaufspannvorrichtung nach wie vor mittig durch das Portal hindurch verfahrbar sein kann. Durch die in Bezug auf die Mittelebene asymmetrische Bauweise wird von einer Seite der Maschine her eine bessere Zugänglichkeit zum Werkzeugeingriffspunkt gewährleistet. Diese asymmetrische Bauweise erweist sich auch unabhängig von der starken Neigung der Führungsebene der sich in X-Richtung erstreckenden ebenen Linearführung als vorteilhaft.

Vorzugsweise ist bei einer solchen Portalfräsmaschine mit asymmetrischer Bauweise das Portal bezüglich des Maschinenbetts derart angeordnet, dass die aus dem Portal und dem Maschinenbett gebildete Struktur im Wesentlichen eine Grundrissform nach Art eines zweischenkligen rechten Winkels aufweist, wobei ein Schenkel durch den Maschinenbettgrundriss und der andere durch den Portalgrundriss gebildet wird. Dadurch wird eine besonders einfache und kompakte Struktur der Maschine erreicht.

Gemäss einer weiteren bevorzugten Ausführungsart der Erfindung ist bei einer Portalfräsmaschine mit einem Portal, an welchem ein Fräsaggregat translatorisch in einer ersten Richtung (Z) und einer zweiten Richtung (Y) quer zur Maschinenlängsrichtung (X) verfahrbar angeordnet ist, und einem länglichen Maschinenbett, an welchem eine im Wesentlichen horizontal in Maschinenlängsrichtung (X) durch das Portal hindurch führende ebene Linearführung für einen eine Werkstückaufspannvorrichtung tragenden, in X-Richtung verfahrbaren Schlitten angebracht ist, die aus dem Maschinenbett und dem Portal gebildete Struktur als monolithischer, homokinetischer Block (auch als Monoblock bezeichnet) ausgebildet. Die Ausbildung der das Maschinenbett und das Portal umfassende Struktur als Monoblock gewährleistet eine gute Wärmeleitung zwischen den verschiedenen Strukturteilen und eine gute Steifigkeit der Struktur. Eine solche Portalfräsmaschine mit Monoblockstruktur kann selbstverständlich auch mit einer stark geneigten Führungsebene der sich in X-Richtung erstreckenden ebenen Linearführung und/oder mit einem in Bezug auf die Portalmitte aussermittig angeordneten Maschinenbett versehen sein. Der Aspekt der Ausbildung der das Maschinenbett und das Portal umfassende Struktur als Monoblock erweist sich jedoch auch unabhängig von der starken Neigung der Führungsebene der sich in X-Richtung erstreckenden ebenen Linearführung oder der in Bezug auf die Portalmitte aussermittigen Anordnung des Maschinenbetts als vorteilhaft.

Vorzugsweise ist bei einer Portalfräsmaschine mit Monoblockstruktur der ganze Monoblock aus Polymerbeton gefertigt. Grundsätzlich können jedoch auch andere für den Bau von Portalfräsmaschinen geeignete Materialien verwendet werden.

Die Monoblockstruktur kann aus einzelnen Gussteilen zusammengesetzt sein. Dabei können die einzelnen Gussteile aus einem einheitlichen Gussmaterial gefertigt sein, wobei allfällige nach dem Zusammenstellen der einzelnen Gussteile zur gewünschten Struktur zwischen den Gussteilen vorhandenen Zwischenräume mit dem selben Gussmaterial ausgegossen sind, um eine hinsichtlich des Materials homogene Verbindung zwischen den Gussteilen zu schaffen. Auf diese Art lassen sich auch komplizierte Monoblockstrukturen herstellen.

Vorzugsweise ist das Portal als einstückiges Gussteil ausgebildet, in welches das ebenfalls als einstückiges Gussteil ausgebildete Maschinenbett eingesetzt ist, wobei das Maschinenbett als Träger ausgebildet ist, an welchem die Linearführung angebracht ist. Auf diese Art lassen sich in relativ einfacher und kostengünstiger Weise Portalfräsmaschinen mit verschieden langen X-Führungen bzw. X-Hüben herstellen.

Im Falle einer vergleichsweise einfachen Form kann jedoch die ganze aus dem Maschinenbett und dem Portal gebildete Struktur auch als einstückiges Gussteil ausgebildet sein. Dadurch wird eine äusserst einfache Herstellung dieser Struktur ermöglicht. Zudem wird eine besonders gute Steifigkeit und Wärmeleitfähigkeit der Struktur erreicht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Portalfräsmaschine gemäss einer bevorzugten Ausführungsart der Erfindung in einer vereinfachten perspektivischen Ansicht;
- Fig. 2: die Portalfräsmaschine aus Fig. 1 in einer Draufsicht von oben.

Grundsätzlich sind in den Figuren gleiche Teile mit gleichen Bezugszeichen versehen.

### Wege zur Ausführung der Erfindung

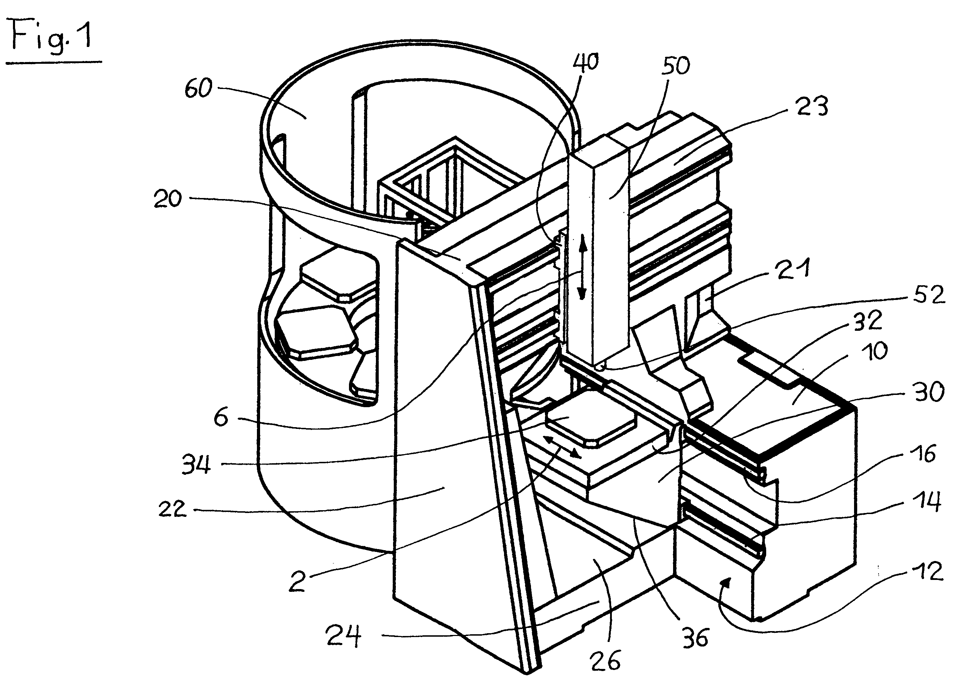

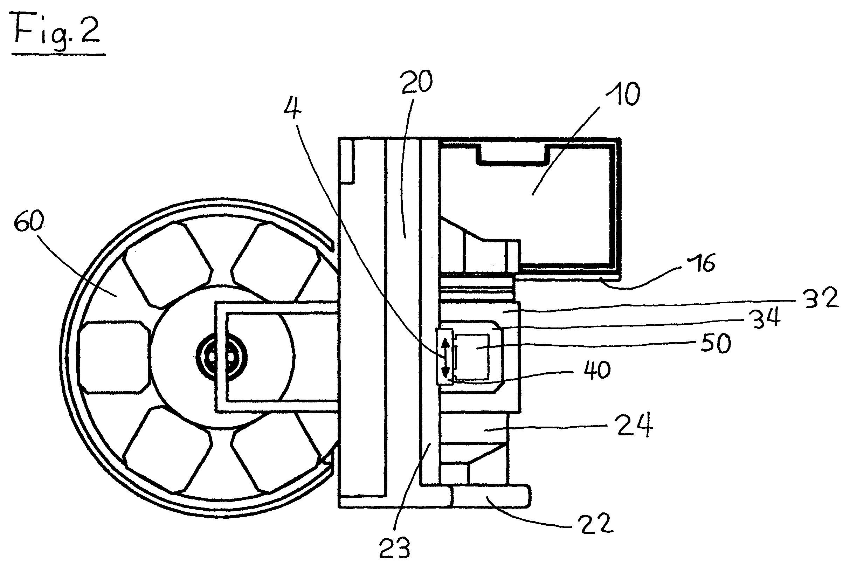

Die in den Figuren 1 und 2 dargestellte Portalfräsmaschine umfasst ein Maschinenbett 10, das im Wesentlichen die Form eines länglichen Quaders mit einer Bodenseite, einer Deckenseite, zwei Längsseiten und zwei Stirnseiten hat. Das quaderförmige Maschinenbett 10 ist derart auf einem festen Untergrund (nicht dargestellt) angeordnet, dass die Boden- und Deckenseiten horizontal liegen und die Längs- sowie die Stirnseiten vertikal stehen. Die Längsrichtung des Maschinenbetts 10 (auch als Maschinenlängsrichtung bezeichnet) wird nachfolgend als X-Richtung der in Fig. 1 und Fig. 2 dargestellten Portalfräsmaschine bezeichnet.

Im Bereich des einen Längsendes des Maschinenbetts ist ein Portal 20 angeordnet, das fest mit dem Maschinenbett 10 verbunden rechtwinklig zum Maschinenbett 10 angeordnet ist. Das Portal 20 umfasst einen kurzen Ständer 21, der im Bereich despor-talseitigen Längsendes des Maschinenbetts 10 auf die Deckenseite des quaderförmigen Maschinenbetts 10 aufgesetzt ist. Das Portal 20 umfasst weiter einen langen Ständer 22, der um die Quaderhöhe des Maschinenbetts 10 länger ist als der kurze Ständer 21. Die beiden Ständer 21, 22 sind im Wesentlichen parallel zueinander, vertikal stehend und in einem Abstand zueinander angeordnet. Sie sind im Bereich ihrer oberen Enden durch einen länglichen Querträger 23 fest miteinander verbunden, der horizontal und rechtwinklig zur Längsrichtung des Maschinenbetts 10 (d.h. zur X-Richtung) angeordnet und sowohl fest mit dem langen Träger 22 als auch fest mit dem kurzen Träger 21 verbunden ist. Die Längsrichtung des Querträgers 23 wird nachfolgend als Y-Richtung der in Fig. 1 und Fig. 2 dargestellten Maschine bezeichnet.

Im Bereich des unteren Endes des langen Ständers 22 ist an diesem eine längliche Quertraverse 24 (nachfolgend als Sockeltraverse 24 bezeichnet) an einem ihrer Längsenden fest angebracht. Das andere Längsende dieser Sockeltraverse 24 ist an der dem langen Ständer zugewandten Längsseite 12 des Maschinenbetts 10 (nachfolgend als innere Längsseite 12 des Maschinenbetts 10 bezeichnet), in einem unteren Bereich derselben, fest angebracht. Die Sockeltraverse 24 ist im Wesentlichen parallel zum Querträger 23 des Portals angeordnet und erstreckt sich somit inY-Richtung. Sie schafft eine feste Verbindung zwischen dem Fuss des langen Ständers 22 und dem quaderförmigen Maschinenbett 10.

Insgesamt bilden die beiden Ständer 21, 22, der Querträger 23, das Maschinenbett 10 und die Sockeltraverse 24 eine ringförmig geschlossene Struktur, welche einen in X-Richtung verlaufenden, im Wesentlichen rechteckigen Durchgang (nachfolgend als Portaldurchgang bezeichnet) begrenzt. Dieser Portaldurchgang wird unten durch die Sockeltraverse 24, auf der einen Seite durch den langen Ständer 22, auf der anderen Seite durch das Maschinenbett 10 sowie den kurzen Ständer 21 und oben durch den Querträger 23 begrenzt.

Die aus den beiden Ständern 21, 22, dem Querträger 23, dem Maschinenbett 10 und der Sockeltraverse 24 gebildete Struktur ist als monolithischer, homokinetischer Block, d.h. als Monoblock, ausgebildet. Der gesamte Monoblock ist aus Polymerbeton gefertigt. Der in den Figuren 1 - 2 dargestellte Monoblock ist aus mehreren Bauteilen zusammengesetzt, die zunächst als einstückige Gussteile hergestellt und anschliessend zu dem in den Figuren 1 - 2 dargestellten Monoblock zusammengesetzt wurden, wobei die Zwischenräume zwischen den einzelnen Bauteilen mit Polymerbeton ausgegossen wurden, um die Bauteile fest miteinander zu verbinden und einemonolithische Struktur zu bilden.

Die aus dem Portal 20 und dem Maschinenbett 10 gebildete Struktur hat - wie am besten in Fig. 2 zu erkennen ist - im Wesentlichen eine Grundrissform nach Art eines zweischenkligen Winkels. Ein Schenkel dieser Winkelform wird durch den Grundriss des Maschinenbetts 10 gebildet, der andere durch den Grundriss des Portals 20. Die an der Aussenseite des Winkels liegende Portalseite wird nachfolgend als Rückseite des Portals 20 bezeichnet, während die an der Innenseite des Winkels liegende Portalseite (von welcher aus sich das Maschinenbett 10 zu seinem vom Portal 20 distanzierten Längsende erstreckt) als Vorderseite des Portals 20 bezeichnet wird.

An der inneren Längsseite 12 des Maschinenbetts 10 (d.h. an der den Portaldurchgang begrenzenden Längsseite 12 des Maschinenbetts 10) ist eine horizontal inX-Richtung verlaufende Linearführung (nachfolgend als X-Führung bezeichnet) angeordnet. Die X-Führung umfasst zwei parallele, sich in X-Richtung erstreckende Führungsschienen 14, 16, welche übereinander an der vertikalen inneren Längsseite 12 des Maschinenbetts 10 fest angebracht sind und die Führungsebene der X-Führung definieren. Bei der X-Führung handelt es sich somit um eine ebene Linearführung mit vertikaler Führungsebene.

Die Führungsschienen 14, 16 der X-Führung dienen zur Führung eines in X-Richtung verfahrbaren Schlittens 30 (X-Schlitten 30), der als Werkstücktisch 30 ausgebildet und mit einer Aufspannvorrichtung 32 zum Aufspannen von Werkstücken 34 versehen ist. Die Führungsschienen 14, 16 sind derart in einem oberen Bereich der inneren Längsseite 12 des Maschinenbetts 10 angeordnet, dass der X-Schlitten 30 oberhalb der Sockeltraverse 24 und über diese hinweg durch das Portal 20 hindurch verfahrbar ist. Die Bewegungsrichtung des X-Schlittens ist durch den Doppelpfeil 2 angegeben. Die Antriebsmittel (nicht dargestellt) zum Bewegen des X-Schlittens 30 entlang der X-Führung können eine Antriebsspindel, einen Linearmotor oder andere für lineare Bewegungsachsen gebräuchliche Antriebsvorrichtungen umfassen.

Der X-Schlitten 30 hat eine von der X-Führung an schräg nach oben ansteigende Unterseite 36. Dadurch gibt es, selbst wenn derX-Schlitten 30 direkt im Portaldurchgang positioniert ist, einen Freiraum zwischen der Unterseite 36 des X-Schlittens 30, dem langen Ständer 22 und der Sockeltraverse 24 des Portals 20. Im Bereich dieses Freiraums ist in der Sockeltraverse 24 ein in X-Richtung verlaufender Kanal 26 ausgebildet, der zur Aufnahme einer Spänefördervorrichtung (nicht dargestellt) z.B. in Form eines Förderbandes vorgesehen ist.

Aufgrund der stark geneigten (im vorliegenden Fall sogar vertikalen) Anordnung der durch die Führungsschienen 14, 16 definierten Führungsebene der X-Führung können Späne, die während der Werkstückbearbeitung erzeugt werden, nicht auf der X-Führung liegen bleiben und deren Betrieb beeinträchtigen. Sie fallen und/oder rutschen vielmehr allein aufgrund der Schwerkraft in die der inneren Längsseite 12 des Maschinenbetts 10 entlang führende Spänefördervorrichtung und werden durch diese automatisch von der Portalfräsmaschine weg befördert.

An der Vorderseite des Portals 20 ist eine in Y-Richtung verlaufende Linearführung (nachfolgend als Y-Führung bezeichnet) angeordnet. Die Y-Führung umfasst zwei parallele, sich in Y-Richtung erstreckende Führungsschienen, welche übereinander an der vertikalen Vorderseite des Querträgers 23 des Portals 20 fest angebracht sind. Die Y-Führung dient zur Führung eines in Y-Richtung verfahrbaren Schlittens 40 (Y-Schlitten 40), an welchem ein bezüglich des Y-Schlittens 40 in vertikaler Richtung (auch als Z-Richtung bezeichnet) verfahrbares Fräsaggregat 50 in Form eines mit einer Frässpindel 52 versehenen Spindelkastens 50 angeordnet. Die Bewegungsrichtungen des Y-Schlittens 40 und des Spindelkastens 50 sind durch die Doppelpfeile 4 bzw. 6 angegeben. Die Antriebsmittel (nicht dargestellt) zum Bewegen desY-Schlittens 40 und des Spindelkastens 50 in Y- bzw. Z-Richtung können wiederum eine Antriebsspindel, einen Linearmotor oder andere für lineare Bewegungsachsen gebräuchliche Antriebsvorrichtungen umfassen.

Die oben beschriebene und in den Figuren 1 - 2 dargestellte Konstruktion der Portalfräsmaschine ermöglicht es, ein auf dem Werkstücktisch 30 aufgespanntes Werkstück 34 im Bereich des Innenwinkels der winkelförmigen Grundrissstruktur der Maschine zu bearbeiten. Der Werkzeugeingriffspunkt befindet sich somit in einem Bereich, wo die Maschine eine optimale Steifigkeit aufweist. Zudem wird durch diese Maschinenkonstruktion eine gute Zugänglichkeit zum Werkzeugeingriffspunkt gewährleistet, denn der Werkzeugeingriffspunkt ist lediglich auf den beiden durch die Winkelschenkel definierten Seiten von der Maschine umgeben, während er von den übrigen beiden Seiten her für einen Operateur frei zugänglich ist.

Im Bereich hinter der Rückseite des Portals 20 ist ein mit einer automatischen Wechselvorrichtung versehenes Werkstückmagazin 60 angeordnet, welche es ermöglicht, die in den Figuren 1 - 2 dargestellte Portalfräsmaschine automatisch mit Werkstückrohlingen zu versorgen und die bearbeiteten Werkstücke wieder von der Portalfräsmaschine zu übernehmen.

Es versteht sich von selbst, dass die in den Figuren 1 - 2 dargestellte Portalfräsmaschine weiter mit einem Werkzeugmagazin und einer automatischen Werkzeugwechselvorrichtung ausgerüstet werden kann, wie sie für Fräsmaschinen gebräuchlich sind. In der Umgebung des Werkzeugeingriffspunkts ist ausreichend Platz zur Installation eines geeigneten Werkzeugmagazins mitsamt einem Werkzeugwechsler vorhanden, ohne dass durch eine solche Installation der Zugang für einen Operateur zum Werkzeugeingriffspunkt übermässig beeinträchtigt würde. Das Werkzeugmagazin und der Werkeugwechsler können z.B. auf dem vom Portal weg führenden Teil des Maschinenbetts 10 installiert werden. In Verbindung mit der automatischen Späneabfuhr und dem automatisierten Werkstückwechselmagazin 60 kann dadurch ein vollautomatischer Betrieb der in den Figuren 1 - 2 dargestellten Portalfräsmaschine erreicht werden.

Zusammenfassend ist festzustellen, dass durch die Erfindung eine Portalfräsmaschine angegeben wird, welche eine gute Späneabfuhr und eine gute Zugänglichkeit zum Werkzeugeingriffspunkt gewährleistet.

## Patentansprüche

1. Portalfräsmaschine mit einem Portal (20), an welchem ein Fräsaggregat (50) translatorisch in einer ersten Richtung (Z) und einer zweiten Richtung (Y) quer zur Maschinenlängsrichtung (X) verfahrbar angeordnet ist, und einem länglichen Maschinenbett (10), an welchem eine im Wesentlichen horizontal in Maschinenlängsrichtung (X) durch das Portal hindurch führende ebene Linearführung (14, 16) für einen eine Werkstückaufspannvorrichtung (32) tragenden, in X-Richtung (2) verfahrbaren Schlitten (30) angebracht ist, **dadurch gekennzeichnet, dass** die Führungsebene der Linearführung (14, 16) bezüglich der Horizontalen quer zur X-Richtung um einen Winkel derart geneigt ist, dass beim Fräsen entstehende Späne allein aufgrund der Schwerkraft von der Linearführung (14, 16) herab fallen.

2. Portalfräsmaschine nach Anspruch 1, **dadurch gekennzeichnet, dass** die Führungsebene der Linearführung (14, 16) bezüglich der Horizontalen quer zur X-Richtung um einen Winkel geneigt ist, der grösser als 40 Grad, vorzugsweise grösser als 60 Grad, insbesondere ungefähr 90 Grad ist.

3. Portalfräsmaschine nach Anspruch 1, **dadurch gekennzeichnet, dass** die Führungsebene der Linearführung bezüglich der Horizontalen quer zur X-Richtung um einen Winkel geneigt ist, der grösser als 90 Grad ist, so dass der Schlitten hängend an der Linearführung geführt wird.

4. Portalfräsmaschine nach einem der Ansprüche 1 bis 3, **gekennzeichnet durch** eine Ausbildung der Linearführung derart, dass der in X-Richtung an der Linearführung verfahrbare Schlitten wahlweise auf verschiedenen Höhen an der Linearführung montiert werden kann.

5. Portalfräsmaschine nach einem der Ansprüche 1 bis 4, **dadurch gekennzeichnet, dass** am Portal (20) in horizontaler Y-Richtung (4) quer zur X-Richtung (2) verfahrbar ein weiterer Schlitten (40) angeordnet ist, an welchem in vertikaler Z-Richtung (6) verfahrbar das Fräsaggregat (50) in Form eines mit einer Frässpindel (52) versehenen Spindelkastens (50) angeordnet ist.

6. Portalfräsmaschine insbesondere nach einem der Ansprüche 1 bis 5, mit einem Portal (20), an welchem ein Fräsaggregat (50) translatorisch in einer ersten Richtung (Z) und einer zweiten Richtung (Y) quer zur Maschinenlängsrichtung (X) verfahrbar angeordnet ist, und einem länglichen Maschinenbett (10), an welchem eine im Wesentlichen horizontal in Maschinenlängsrichtung (X) durch das Portal hindurch führende ebene Linearführung (14, 16) für einen eine Werkstückaufspannvorrichtung (32) tragenden, in X-Richtung (2) verfahrbaren Schlitten (30) angebracht ist, **dadurch gekennzeichnet, dass** das Portal (20) rechtwinklig zu der durch das längliche Maschinenbett (10) definierten Maschinenlängsrichtung (X) angeordnet ist, und dass das Maschinenbett (10) aussermittig in Bezug auf eine vertikale, in X-Richtung durch die Portalmitte hindurch verlaufende Mittelebene angeordnet ist.

7. Portalfräsmaschine nach Anspruch 6, **gekennzeichnet durch** eine Anordnung des Portals (20) bezüglich dem Maschinenbett (10) derart, dass die aus dem Portal (20) und dem Maschinenbett (10) gebildete Struktur im Wesentlichen eine Grundrissform nach Art eines zweischenkligen rechten Winkels hat, wobei ein Schenkel **durch** den Maschinenbettgrundriss und der andere **durch** den Portalgrundriss gebildet wird.

8. Portalfräsmaschine insbesondere nach einem der Ansprüche 1 bis 7, mit einem Portal (20), an welchem ein Fräsaggregat (50) translatorisch in einer ersten Richtung (Z) und einer zweiten Richtung (Y) quer zur Maschinenlängsrichtung (X)verfahrbar angeordnet ist, und einem länglichen Maschinenbett (10), an welchem eine im Wesentlichen horizontal in Maschinenlängsrichtung (X) durch das Portal hindurch führende ebene Linearführung (14, 16) für einen eine Werkstückaufspannvorrichtung (32) tragenden, in X-Richtung (2) verfahrbaren Schlitten (30) angebracht ist, **dadurch gekennzeichnet, dass** die aus dem Maschinenbett (10) und dem Portal (20) gebildete Struktur als monolithischer, homokinetischer Block ausgebildet ist.

9. Portalfräsmaschine nach Anspruch 8, **dadurch gekennzeichnet, dass** die aus dem Maschinenbett (10) und dem Portal (20) gebildete Struktur aus einzelnen Gussteilen zusammengesetzt ist, die aus einem einheitlichen Gussmaterial gefertigt sind, wobei allfällige nach dem Zusammenstellen der einzelnen Gussteile zur gewünschten Struktur zwischen den Gussteilen vorhandene Zwischenräume mit dem selben Gussmaterial ausgegossen sind, um eine hinsichtlich des Materials homogene Verbindung zwischen den Gussteilen zu schaffen.

10. Portalfräsmaschine nach Anspruch 8 oder 9, **dadurch gekennzeichnet, dass** das Portal (20) als einstückiges Gussteil ausgebildet ist, in welches das ebenfalls als einstückiges Gussteil ausgebildete Maschinenbett (10) eingesetzt ist, wobei das Maschinenbett (10) nach Art eines Trägers (10) ausgebildet ist, an welchem die Linearführung (14, 16) angebracht ist.

11. Portalfräsmaschine nach Anspruch 8, **dadurch gekennzeichnet, dass** die aus dem Maschinenbett und dem Portal gebildete Struktur als einstückiges Gussteil ausgebildet ist.
